(19) Europäisches Patentamt
European Patent Office
Office européen des brevets

(11) **EP 1 892 789 B1**

(12) **EUROPEAN PATENT SPECIFICATION**

(45) Date of publication and mention
of the grant of the patent:
**28.02.2018 Bulletin 2018/09**

(51) Int Cl.:
***H01M 10/052*** (2010.01)

(21) Application number: **05751435.8**

(86) International application number:
**PCT/JP2005/010977**

(22) Date of filing: **15.06.2005**

(87) International publication number:
**WO 2006/134653 (21.12.2006 Gazette 2006/51)**

(54) **LITHIUM SECONDARY BATTERY**

LITHIUM-SEKUNDÄRBATTERIE

BATTERIE SECONDAIRE AU LITHIUM

(84) Designated Contracting States:
**DE**

(43) Date of publication of application:
**27.02.2008 Bulletin 2008/09**

(73) Proprietor: **Mitsubishi Chemical Corporation
Tokyo 100-8251 (JP)**

(72) Inventors:
• **ONUKI, Masamichi,
c/o Mitsubishi Chemical Group
Inashiki-gun,
Ibaraki 300-0332 (JP)**
• **KINOSHITA, Shinichi,
c/o Mitsubishi Chemical Group
Inashiki-gun,
Ibaraki 300-0332 (JP)**

(74) Representative: **Hoffmann Eitle
Patent- und Rechtsanwälte PartmbB
Arabellastraße 30
81925 München (DE)**

(56) References cited:
**EP-A- 1 199 765      EP-A- 1 276 165
EP-A- 1 357 628      EP-A- 1 406 337
JP-A- 11 354 385      JP-A- 2001 185 214
JP-A- 2002 042 865      JP-A- 2003 031 259
JP-A- 2003 331 927      JP-A- 2003 338 277
JP-A- 2004 235 145      JP-A- 2004 273 186
JP-A- 2005 093 414      US-A1- 2004 224 235
US-B2- 6 861 175**

**Description**

Technical Field

The present invention relates to the use of at least one vinylethylene carbonate compound and at least one vinylene carbonate compound in the manufacture of a lithium secondary battery using a non-aqueous electrolyte solution containing those compounds.

Background Art

A lithium secondary battery has an advantage that it has a high energy density and is not prone to self-discharge. Accordingly, it has been widely used recently as a power source of consumer-oriented mobile devices such as cellular phones, notebook computers and PDA.

An electrolyte solution of a lithium secondary battery hitherto known consists of a lithium salt, which is a supportive electrolyte, and a non-aqueous solvent. The non-aqueous solvent used for this purpose is required to have a high dielectric constant necessary for the dissociation of the lithium salt, to achieve high ion conductivity in the broad temperature range, and to be stable in the battery. It is difficult for any one solvent to satisfy all these requirements and, therefore, the non-aqueous solvent is usually used as a combination of a high boiling point solvent represented by propylene carbonate and ethylene carbonate, and a low boiling point solvent such as dimethyl carbonate and diethyl carbonate.

Furthermore, in order to improve various characteristics of a lithium secondary battery such as initial capacity, rate characteristics, cycle characteristics, high-temperature storage characteristics, low-temperature characteristics, trickle charge (continuous charge) characteristics, self-discharge characteristics and overcharge prevention characteristics, a number of methods have been reported in which small amounts of various auxiliary agents were added to the electrolyte solution. However, an ideal electrolyte solution superior in all these characteristics has not yet been developed.

On the other hand, attempts are being made to charge the battery to a high final voltage exceeding 4.2 V, in order to increase energy density. Specifically, when an ordinary lithium secondary battery hitherto known is charged at 25 °C, the terminal-to-terminal open circuit voltage at the end of charge is usually 4.2 V or lower. Therefore, attempts have been made to develop a lithium secondary battery whereby terminal-to-terminal open circuit voltage at the end of charge at 25 °C exceeds 4.2 V. However, as the voltage increases, a side reaction originating from decomposition of the electrolyte solution at the positive electrode can not be avoided, leading to serious deterioration of cycle characteristics. Thus, it has been practically impossible so far to charge an ordinary lithium secondary battery until terminal-to-terminal open circuit voltage exceeds 4.2 V.

Furthermore, application of an electrolyte solution hitherto known, which has been claimed to be effective in improving cycle characteristics at a voltage of 4.2 V or lower, does not necessarily bring about improvement in battery performance at a voltage exceeding 4.2 V. For example, an electrolyte solution containing cyclohexylbenzene, disclosed in Patent Document 1, failed to bring about improvement in cycle characteristics at 4.4 V, as will be shown later in Comparative Example.

In response to a request to heighten the terminal-to-terminal open circuit voltage at the end of charge, a proposal has been made to use an electrolyte solution consisting of a non-aqueous solvent containing 50 volume % or more of γ-butyrolactone and a lithium salt, as described in Patent Document 2. In this Patent Document 2, it is also described that, by using this technique, the capacity of the secondary battery, whose terminal-to-terminal open circuit voltage at 25 °C on full charge is 4.3 V or higher, can be increased and, in addition, cycle characteristics can be improved.

According to Patent Document 3, it was found possible to suppress the elution of transition metals from lithium composite oxides by maintaining protonic impurities and water content in the electrolyte at a low level, and to increase discharge capacity after accelerated storage test at 60 °C in a battery whose voltage on charge registered 4.25 V or higher. It was also described that, by using an electrolyte solution containing less than 10 volume % of vinylene carbonate or vinylethylene carbonate, a coat was formed on the surface of the negative electrode.

Furthermore, in the Patent Document 4, it is described that, by using an electrolyte solution containing a sultone compound with a 5 to 7-membered cyclic sulfonate structure as the main skeleton, cycle characteristics at 4.3 V can be improved.

[Patent Document 1] Japanese Patent Publication No. 3417228
[Patent Document 2] Japanese Patent Laid-Open Publication (Kokai) No. 2003-272704
[Patent Document 3] The pamphlet of International Publication No. 03/019713
[Patent Document 4] Japanese Patent Laid-Open Publication (Kokai) No. 2004-235145

EP 1 199 765 A1 relates to a non-aqueous electrolyte secondary battery comprising a cyclic carboxylic acid ester and a cyclic carbonic acid ester. The battery is charged at an upper limit voltage of 4.2 V.

EP 1 406 337 A1 relates to a non-aqueous secondary battery comprising a non-aqueous solvent which contains $\gamma$-butyrolactone, ethylene carbonate, at least one vinylene carbonate compound and at least one vinylethylene carbonate compound.

JP-A-2002/042865 describes a thin-type non-aqueous electrolyte secondary battery wherein the electrolyte is mainly composed of lithium tetrafluoro forate and the non-aqueous solvent is composed of $\gamma$-butyrolactone or a mixture of $\gamma$-butyrolactone and cyclic carbonate and further includes at least one compound selected from vinylene carbonate, a vinylene carbonate derivative and vinyl ethylene carbonate.

EP 1 276 165 A1 describes a non-aqueous secondary cell including a non-aqueous electrolyte which contains a non-aqueous solvent, a lithium salt dissolved therein, a vinyl ethylene carbonate compound and at least one compound selected from vinylene carbonate, a cyclic sulfonic acid ester or a cyclic sulfuric acid ester, and an acid anhydride. The cell is charged at not more than 4.20 V.

US 2004/0224235 A1 describes a lithium secondary battery containing a non-aqueous electrolyte, wherein the non-aqueous electrolyte includes vinylene carbonate and vinyl ethylene carbonate.

JP-A-11-354385 discloses a non-aqueous electrolytic liquid for a capacitor which comprises an electrolyte and an electrolytic solvent comprising a cyclic carbonic ester.

US 6,861,175 B2 pertains to a non-aqueous electrolyte secondary battery comprising a non-aqueous electrolyte containing ethylene carbonate and $\gamma$-butyrolactone. The battery is charged at not more than 4.2 V.

EP 1 357 628 A1 relates to a non-aqueous electrolyte for lithium secondary batteries, wherein the electrolyte comprises a non-aqueous solvent comprising a phosphate and optionally a cyclic carboxylate and a cyclic carbonate and further optionally a vinylene carbonate compound and/or a vinyl ethylene carbonate compound.

Disclosure of the Invention

Problem to Be Solved by the Invention

Recently, there has been an increasing demand for higher performance of a lithium secondary battery, and it has been requested that a number of characteristics such as capacity, cycle characteristics, high-temperature storage characteristics and continuous charge characteristics are realized simultaneously at a high level. Of these characteristics, improvement in continuous charge characteristics and cycle characteristics are particularly being sought, as the demand for notebook computers for office use is expanding.

However, as mentioned above, a cycle test, conducted at a final charge voltage exceeding 4.2 V, failed to give a satisfactory result, with marked deterioration of a battery. This was also true for the previously proposed techniques described in Patent Documents 1 to 4, in which a lithium secondary battery having a high terminal-to-terminal open circuit voltage at the end of charge was claimed to have been obtained.

The present invention is an attempt to solve the above problems and aims at providing a lithium secondary battery which realizes a high terminal-to-terminal open circuit voltage at the end of charge, is capable of suppressing the amount of evolved gas on continuous charge and, further, is accompanied by less extensive capacity deterioration on charge/discharge cycle.

Means for Solving the Problem

The inventors of the present invention have made an intensive investigation in order to solve these problems. They found that it is possible to heighten a terminal-to-terminal open circuit voltage at the end of charge by including in the non-aqueous electrolyte solution both vinylethylene carbonate compound and vinylene carbonate compound, It was also found possible to suppress the amount of evolved gas on continuous charge and improve cycle capacity retention rate, which led to the completion of the present invention.

Accordingly, a lithium secondary battery manufactured in the present invention comprises: a positive electrode; a negative electrode; and a non-aqueous electrolyte solution containing both at least one vinylethylene carbonate compound and at least one vinylene carbonate compound, wherein the terminal-to-terminal open circuit voltage at 25 °C at the end of charge is 4.25 V or higher (claim 1).

As one preferred feature, said vinylene carbonate compound is vinylene carbonate (claim 2).

As another preferred feature, said vinylethylene carbonate compound is at least one type selected from the group consisting of vinylethylene carbonate, 1,2-divinylethylene carbonate and 1-methyl-1-vinylethylene carbonate (claim 3).

It is also preferred that the above-mentioned terminal-to-terminal open circuit voltage is 4.3 V or higher (claim 4).

Advantageous effect of the invention

According to the present invention, in a lithium secondary battery, it is possible to charge the battery up to a high terminal-to-terminal open circuit voltage, suppress the amount of gas evolved on continuous charge, and improve the cycle characteristics.

Brief Description of the Drawings

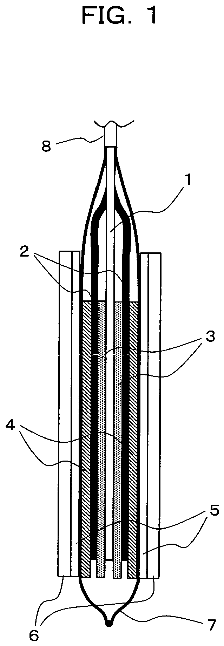

[Fig. 1] Fig. 1 is a schematic cross-sectional view illustrating the structure of a lithium secondary battery prepared in Examples, Comparative examples and Reference examples of the present invention.

Best Mode for Carrying Out the Invention

An embodiment of the present invention will be explained below. It is to be noted that this embodiment is by no means restrictive and any modifications can be added thereto insofar as they do not depart from the scope of the present invention.
The lithium secondary battery of the present invention comprises a non-aqueous electrolyte solution, a positive electrode and a negative electrode as components. However, other components may be added to the lithium secondary battery of the present invention.

[I. Non-aqueous electrolyte solution]

The non-aqueous electrolyte solution used in the lithium secondary battery of the present invention (hereinafter referred to as "the non-aqueous electrolyte solution of the present invention" as appropriate) contains at least both vinylethylene carbonate compound and vinylene carbonate compound.
Further, the non-aqueous electrolyte solution of the present invention is a non-aqueous electrolyte solution which contains at least an electrolyte and a non-aqueous solvent.

[I-1-1. Vinylethylene carbonate compound]

[I-1-1-1. Kind of vinylethylene carbonate compound]

In case a non-aqueous electrolyte solution of the present invention contains both vinylethylene carbonate compound and vinylene carbonate compound, the vinylethylene carbonate compound contained in the non-aqueous electrolyte solution of the present invention (hereinafter referred to as "vinylethylene carbonate compound of the present invention", as appropriate) indicates vinylethylene carbonate itself and vinylethylene carbonate in which its hydrogen atom is substituted by at least one substituent.
There is no special limitation on the kind of the substituent of vinylethylene carbonate compound of the present invention insofar as the advantage of the present invention is not significantly impaired. As examples can be cited alkyl group such as methyl group and ethyl group; alkenyl group such as vinyl group and allyl group; aryl group such as phenyl group and tolyl group; alkoxy group such as methoxy group and ethoxy group; halogen group such as fluoro group, chloro group and bromo group. Particularly preferred are hydrocarbon groups such as alkyl group, alkenyl group and aryl group.
Vinylethylene carbonate compound of the present invention suppresses the reaction of the electrolyte solution through forming a protective coat on the negative electrode and positive electrode on initial charge and, therefore, can improve cycle characteristics of the lithium secondary battery of the present invention.
There is no special limitation on the molecular weight of vinylethylene carbonate compound of the present invention insofar as the advantage of the present invention is not significantly impaired. The molecular weight is usually 100 or higher, and usually 300 or lower, preferably 200 or lower, more preferably 150 or lower. In case the molecular weight exceeds the upper limit of the above range, compatibility or solubility of vinylethylene carbonate compound of the present invention in the non-aqueous electrolyte solution decreases, and sufficient advantage of improvement in cycle characteristics of a lithium secondary battery, based on this non-aqueous electrolyte solution, can not be guaranteed.
As concrete examples of vinylethylene carbonate compound of the present invention can be cited vinylethylene carbonates such as vinylethylene carbonate, 1,1-divinylethylene carbonate, 1,2-divinylethylene carbonate; alkyl-substituted vinylethylene carbonates such as 1-methyl-1-vinylethylene carbonate, 1-methyl-2-vinylethylene carbonate, 1-ethyl-1-vinylethylene carbonate, 1-ethyl-2-vinylethylene carbonate, 1,1-dimethyl-1-vinylethylene carbonate, 1,2-dimethyl-1-vinylethylene carbonate, 1,1-diethyl-1-vinylethylene carbonate, 1,2-diethyl-1-vinylethylene carbonate, 1,2,2-trimethyl-1-vinylethylene carbonate, 1,2,2-triethyl-1-vinylethylene carbonate; aryl-substituted vinylethylene carbonates such as 1-phenyl-1-vinylethylene carbonate, 1-phenyl-2-vinylethylene carbonate, 1,1-diphenyl-1-vinylethylene carbonate and 1,2-diphenyl-1-vinylethylene carbonate.

Of these, preferable are vinylethylene carbonates such as vinylethylene carbonate, 1,1-divinylethylene carbonate and 1,2-divinylethylene carbonate; mono-substituted alkyl vinylethylene carbonates such as 1-methyl-1-vinylethylene carbonate, 1-methyl-2-vinylethylene carbonate, 1-ethyl-1-vinylethylene carbonate and 1-ethyl-2-vinylethylene carbonate. Furthermore, more preferable are vinylethylene carbonate, 1,2-divinylethylene carbonate and 1-methyl-1-vinylethylene carbonate.

The vinylethylene carbonate compound of the present invention mentioned above can be used either singly or as a mixture of two or more kinds in any combination and in any ratio.

[I-1-1-2. Composition of vinylethylene carbonate compound]

In case the non-aqueous electrolyte solution of the present invention contains both vinylethylene carbonate compound and vinylene carbonate compound, there is no special limitation on the concentration of vinylethylene carbonate compound insofar as the advantage of the present invention is not significantly impaired. The concentration is usually 0.1 weight % or higher, preferably 0.3 weight % or higher, more preferably 0.5 weight % or higher, and usually 8 weight % or lower, preferably 5 weight % or lower, more preferably 3 weight % or lower. When the concentration is below the above lower limit, it may not be possible to improve the cycle characteristics of the non-aqueous electrolyte solution of the present invention. On the other hand, when the concentration exceeds the upper limit, a thick film will be formed on the negative electrode and, because of high resistance of this film, migration of lithium ions between the non-aqueous electrolyte solution and the negative electrode becomes difficult, leading possibly to deterioration of battery characteristics such as rate characteristics. In case two or more kinds of vinylethylene carbonate compounds of the present invention are used in combination, the sum of the concentration of those vinylethylene carbonate compounds should be adjusted to fall within the above range.

[I-1-2. Vinylene carbonate compound]

[I-1-2-1. Kind of vinylene carbonate compound]

In case the non-aqueous electrolyte solution of the present invention contains both vinylethylene carbonate compound and vinylene carbonate compound, the vinylene carbonate compound contained in the non-aqueous electrolyte solution of the present invention (hereinafter referred to as "the vinylene carbonate compound of the present invention", as appropriate) indicates vinylene carbonate itself and vinylene carbonate in which its hydrogen atom is substituted by at least one substituent.

There is no special limitation on the kind of the substituent of vinylene carbonate compound of the present invention insofar as the advantage of the present invention is not significantly impaired. As examples can be cited alkyl group such as methyl group and ethyl group; alkenyl group such as vinyl group and allyl group; aryl group such as phenyl group and tolyl group; alkoxy group such as methoxy group and ethoxy group; halogen group such as fluoro group, chloro group and bromo group. Particularly preferred are hydrocarbon groups such as alkyl group, alkenyl group and aryl group.

There is no special limitation on the molecular weight of vinylene carbonate compound of the present invention insofar as the advantage of the present invention is not significantly impaired. The molecular weight is usually 80 or higher, and usually 300 or lower, preferably 200 or lower, more preferably 120 or lower. In case the molecular weight exceeds the upper limit of the above range, compatibility or solubility of vinylene carbonate compound of the present invention in the non-aqueous electrolyte solution decreases, and sufficient advantage of improvement in cycle characteristics of a lithium secondary battery of the present invention, based on this non-aqueous electrolyte solution, can not be guaranteed.

As concrete examples of vinylene carbonate compound of the present invention can be cited vinylene carbonate, methylvinylene carbonate, 1,2-dimethylvinylene carbonate, 1,2-diethylvinylene carbonate, 1-ethyl-2-methylvinylene carbonate, phenylvinylene carbonate, 1,2-diphenylvinylene carbonate, 1-methyl-2-phenylvinylene carbonate.

Of these, preferable are vinylene carbonate, 1,2-dimethylvinylene carbonate and 1,2-diphenylvinylene carbonate. Particularly preferable is vinylene carbonate. This is because vinylene carbonate forms a particularly stable interface-protecting film on the negative electrode, bringing about improvement in cycle characteristics of a lithium secondary battery of the present invention.

The vinylene carbonate compound of the present invention mentioned above can be used either singly or as a mixture of two or more kinds in any combination and in any ratio.

[I-1-2-2. Composition of vinylene carbonate compound]

In case the non-aqueous electrolyte solution of the present invention contains both vinylethylene carbonate compound and vinylene carbonate compound, there is no special limitation on the concentration of vinylene carbonate compound insofar as the advantage of the present invention is not significantly impaired. The concentration is usually 0.1 weight % or higher, preferably 0.3 weight % or higher, more preferably 0.5 weight % or higher, and usually 10 weight % or lower, preferably 5 weight % or lower, more preferably 3 weight % or lower. When the concentration is below the above lower limit, it may not be possible for the non-aqueous electrolyte solution of the present invention to improve the cycle characteristics. On the other hand, when the concentration exceeds the upper limit, a thick protective film will be formed on the negative electrode and, because of high resistance of this film, migration of lithium ions between the non-aqueous electrolyte solution and the negative electrode becomes difficult, leading possibly to deterioration of battery characteristics such as rate characteristics. In case two or more kinds of vinylene carbonate compounds of the present invention are used in combination, the sum of the concentration of those vinylene carbonate compounds should be adjusted to fall within the above range.

[I-1-3. Ratio of vinylethylene carbonate compound and vinylene carbonate compound]

In case the non-aqueous electrolyte solution of the present invention contains both vinylethylene carbonate compound and vinylene carbonate compound, there is no special limitation on the ratio of vinylethylene carbonate compound and vinylene carbonate compound in the non-aqueous electrolyte solution of the present invention, insofar as the advantage of the present invention is not significantly impaired. However, the molar ratio of vinylethylene carbonate compound to the total number of moles of vinylethylene carbonate compound and vinylene carbonate compound is usually 0.01 or more, preferably 0.1 or more, more preferably 0.2 or more, and usually 0.9 or less, preferably 0.8 or less, more preferably 0.7 or less. When the above ratio is too low, the stability of a negative electrode protective coat is not guaranteed, leading possibly to inadequate improvement of cycle characteristics and, when it is too high, the evolution of gas is not adequately suppressed at the positive electrode, leading possibly to deterioration of cycle characteristics.

[I-1-4. Non-aqueous solvent]

In case the non-aqueous electrolyte solution of the present invention contains both vinylethylene carbonate compound and vinylene carbonate compound, there is no special limitation on the kind of the non-aqueous solvent and any known non-aqueous solvent can be used. Usually, organic solvents are used. As examples of the non-aqueous solvent can be cited chain carbonate, cyclic carbonate, chain ester, cyclic ester (lactone compound), chain ether, cyclic ether, sulfur-containing organic solvent. Of these solvents, chain carbonate, cyclic carbonate, chain ester, cyclic ester, chain ether and cyclic ether are usually preferred because they can achieve high ionic conduction.
As concrete examples of chain carbonate can be cited dimethyl carbonate, diethyl carbonate, ethylmethyl carbonate, methylpropyl carbonate and ethylpropyl carbonate.
As concrete examples of cyclic carbonate can be cited ethylene carbonate, propylene carbonate and butylene carbonate.
As concrete examples of chain ester can be cited methyl formate, methyl acetate and methyl propionate.
As concrete examples of cyclic ester can be cited γ-butyrolactone and γ-valerolactone.
As concrete examples of chain ether can be cited 1,2-dimethoxyethane, 1,2-diethoxyethane and diethyl ether.
As concrete examples of cyclic ether can be cited tetrahydrofuran, 2-methyltetrahydrofuran, 1,3-dioxolan, 4-methyl-1,3-dioxolan.
As concrete examples of sulfur-containing organic solvent can be cited sulfolane and dimethyl sulfoxide.
The non-aqueous solvent can be used either singly or as a mixture of two or more kinds in any combination and in any ratio. It is preferable, however, that two or more kinds of non-aqueous solvents are used as a mixture in order to achieve the desired characteristics, namely, desired cycle characteristics. It is highly preferable that the solvent consists mainly of cyclic carbonate and chain carbonate or cyclic ester. The term 'mainly' used here means specifically that the non-aqueous solvent contains cyclic carbonate, chain carbonate or cyclic ester to the extent of 70 weight % or more in total.
In case two or more kinds of non-aqueous solvents are used in combination, examples of preferable combination include two-solvent system such as ethylene carbonate and methyl ethyl carbonate, ethylene carbonate and diethyl carbonate, and ethylene carbonate and γ-butyrolactone; three-solvent system such as ethylene carbonate, dimethyl carbonate and ethylmethyl carbonate, ethylene carbonate, ethylmethyl carbonate and diethyl carbonate. A non-aqueous solvent consisting mainly of these components realizes various characteristics in a well-balanced manner and, therefore, can be used conveniently.
In case an organic solvent is used as non-aqueous solvent, there is no special limitation on the number of carbon atoms of the organic solvent, insofar as the advantage of the present invention is not significantly impaired. The number is usually 3 or more, and usually 13 or less, preferably 7 or less. When the number of carbon atoms is too large, the solubility of the electrolyte in the electrolyte solution becomes small and improvement of cycle characteristics, which is the advantage of the present invention, may not be achieved adequately. On the other hand, when the number of carbon atoms is too small, the volatility tends to be high, leading possibly to high internal pressure of the battery, which is not desirable.

Furthermore, there is no special limitation on the molecular weight of organic solvent used as non-aqueous solvent, insofar as the advantage of the present invention is not significantly impaired. It is usually 50 or more, preferably 80 or more, and usually 250 or less, preferably 150 or less. When the molecular weight is too large, the solubility of the electrolyte in the electrolyte solution becomes small and viscosity increases also and improvement of cycle characteristics, which is the advantage of the present invention, may not be achieved adequately. On the other hand, when the molecular weight is too small, the volatility tends to be high, leading possibly to high internal pressure of the battery, which is not desirable.

In case two or more kinds of non-aqueous solvents are used in combination in two- or more than two-solvent system, the ratio of cyclic carbonate in the non-aqueous solvent of the two- or more than two-solvent system is usually 10 volume % or more, preferably 15 volume % or more, more preferably 20 volume % or more, and usually 60 volume % or less, preferably 50 volume % or less, more preferably 40 volume % or less. When the ratio is below the lower limit of the above-mentioned range, dissociation of the lithium salt is difficult to occur, leading to lowering of electroconductivity and therefore a decrease in high-load capacitance. When the ratio exceeds the upper limit, the viscosity of the solution becomes too high and the migration of lithium ions is not easy, leading to a decrease in high-load capacitance.

It is to be noted that, in case γ-butyrolactone is used, it is usually preferable to adjust its concentration to 20 weight % or less.

[I-1-5. Electrolyte]

In case the non-aqueous electrolyte solution of the present invention contains both vinylethylene carbonate compound and vinylene carbonate compound, there is no special limitation on the kind of the electrolyte used and any known electrolytes, which are known to be used as electrolytes of a lithium secondary battery, can be used. Usually, a lithium salt is used.

As lithium salt used as electrolyte, both an inorganic lithium salt and an organic lithium salt can be used.

As examples of inorganic lithium salts can be cited inorganic fluorides such as $LiPF_6$, $LiAsF_6$, $LiBF_4$ and $LiSbF_6$; inorganic chlorides such as $LiAlCl_4$, perhalogenates such as $LiClO_4$, $LiBrO_4$ and $LiIO_4$.

As examples of organic lithium salts can be cited fluorine-containing organic lithium salts as listed below: perfluoroalkane sulfonates such as $CF_3SO_3Li$, and $C_4F_9SO_3Li$ ; perfluoroalkane carboxylates such as $CF_3COOLi$; per-fluoroalkane carbonimide such as $(CF_3CO)_2NLi$; perfluoroalkane sulfonimide such as $(CF_3SO_2)_2NLi$ and $(C_2F_5SO_2)_2NLi$.

Of these electrolytes, preferable are $LiPF_6$, $LiBF_4$, $CF_3SO_3Li$ and $(CF_3SO_2)_2NLi$ because of their high solubility in the non-aqueous solvent and high dissociation capability.

The electrolyte can be used either singly or as a mixture of two or more kinds in any combination and in any ratio.

In particular, combined use of $LiPF_6$ and $LiBF_4$, or $LiPF_6$ and $(CF_3SO_2)_2NLi$ is preferable because it is effective in improving continuous charge characteristics.

There is no special limitation on the concentration of the electrolyte in the non-aqueous electrolyte solution, insofar as the advantage of the present invention is not significantly impaired. The concentration in the non-aqueous electrolyte solution is usually 0.5 mol/L or higher, preferably 0.75 mol/L or higher, and usually 2 mol/L or lower, preferably 1.75 mol/L or lower. When the concentration of the electrolyte is too low, the electric conductivity of the non-aqueous electrolyte solution may be insufficient. On the other hand, when the concentration of the electrolyte is too high, the viscosity of the solution becomes high, the electric conductivity becomes low and precipitation of the electrolyte tends to occur at low temperature, which may lead to lower performance of the lithium secondary battery.

[I-1-6. Other auxiliary agent]

In case the non-aqueous electrolyte solution of the present invention contains both vinylethylene carbonate compound and vinylene carbonate compound, the non-aqueous electrolyte solution of the present invention may contain other auxiliary agent in order to improve such characteristics as permeability of the non-aqueous electrolyte solution and overcharge characteristics of the battery, insofar as the advantage of the present invention is not significantly impaired.

As examples of auxiliary agent can be cited acid anhydrides such as maleic anhydride, succinic anhydride and glutaric anhydride; carboxylic acid esters such as vinyl acetate, divinyl adipate and allyl acetate; sulfur-containing compounds such as diphenyl disulfide, 1,3-propane sultone, 1,4-butane sultone, dimethylsulfone, divinylsulfone, dimethylsulfite, ethylenesulfite, 1,4-butanediol dimethanesulfonate, methyl methanesulfonate and methanesulfonic acid-2-propinyl; aromatic compounds or fluorine-substituted aromatic compounds such as t-butylbenzene, biphenyl, o-terphenyl, 4-fluorobiphenyl, fluorobenzene, 2,4-difluorobenzene, cyclohexylbenzene, diphenylether, 2,4-difluoroanisole and trifluoromethylbenzene.

The auxiliary agent can be used either singly or as a mixture of two or more kinds in any combination and in any ratio.

There is no special limitation on the concentration of the auxiliary agent in the non-aqueous electrolyte solution, insofar as the advantage of the present invention is not significantly impaired. The concentration is usually 0.01 weight % or higher, preferably 0.05 weight % or higher, and usually 10 weight % or lower, preferably 5 weight % or lower. In case two or more kinds of auxiliary agents are used in combination, the sum of their concentrations should fall within the above range.

[I-1-7. State of non-aqueous electrolyte solution]

In case the non-aqueous electrolyte solution of the present invention contains both a vinylethylene carbonate compound and a vinylene carbonate compound, the non-aqueous electrolyte solution, when used for the lithium secondary battery of the present invention, usually exists in the liquid state. It is possible to make it, for example, to be a semi-solid electrolyte, by adding polymer to gelate it. There is no special limitation on the polymer used for making a gel. Examples are polyfluorovinylidene, copolymer of polyfluorovinylidene and hexafluoropropylene, polyethylene oxide, polyacrylate and polymethacrylate. The polymer to be used for making a gel can be used either singly or as a mixture of two or more compounds in any combination and in any ratio.

In case the non-aqueous electrolyte solution is used in the state of semi-solid electrolyte, there is no special limitation on the ratio occupied by the non-aqueous electrolyte solution in the semi-solid electrolyte insofar as the advantage of the present invention is not significantly impaired. The preferable range of ratio of the non-aqueous electrolyte solution in the total amount of the semi-solid electrolyte is usually 30 weight % or higher, preferably 50 weight % or higher, more preferably 75 weight % or higher, and usually 99.95 weight % or lower, preferably 99 weight % or lower, more preferably 98 weight % or lower. When the ratio of the non-aqueous electrolyte solution is too high, the retention of the electrolyte solution is difficult and leakage of the solution is liable to occur. On the other hand, when the ratio is too low, efficiency during charge / discharge and capacity tend to be insufficient.

[I-1-8. Production method of non-aqueous electrolyte solution]

In case the non-aqueous electrolyte solution of the present invention contains both vinylethylene carbonate compound and vinylene carbonate compound, the non-aqueous electrolyte solution of the present invention can be prepared by dissolving in the non-aqueous solvent electrolyte, vinylethylene carbonate compound and vinylene carbonate compound of the present invention, and, as needed, other auxiliary agents.

In the preparation of the non-aqueous electrolyte solution, it is preferable that each material of the non-aqueous electrolyte solution, namely electrolyte, vinylethylene carbonate compound and vinylene carbonate compound of the present invention, non-aqueous solvent and other auxiliary agent, is dehydrated before use. The extent of dehydration, in terms of water content, is usually 50 ppm or lower, preferably 30 ppm or lower. In this specification, ppm indicates a proportion based on weight.

When water is present in the non-aqueous electrolyte solution, reactions such as electrolysis of water, reaction between water and metallic lithium, hydrolysis of lithium salt, are likely to occur, which is not desirable.

There is no special limitation on the method of dehydration. When dehydrating liquid such as non-aqueous solvent, molecular sieve or the like can be used. When dehydrating solid such as electrolyte, drying can be applied at a temperature where decomposition of that solid does not occur.

[II. Lithium secondary battery]

The non-aqueous electrolyte solution of the present invention can be widely used where an ordinary electrolyte solution is used. It is particularly preferable for the use as electrolyte solution of a lithium secondary battery.

The lithium secondary battery of the present invention comprises the non-aqueous electrolyte solution of the present invention described above, positive electrode and negative electrode. The lithium secondary battery of the present invention may comprise other components. For example, the lithium secondary battery usually comprises a spacer.

[II-1. Positive electrode]

A positive electrode is capable of absorbing and releasing lithium. If this requirement is met, there is no other limitation, insofar as the advantage of the present invention is not significantly impaired.

Usually, a layer of positive electrode active material is formed on the current collector and used as positive electrode. A positive electrode may comprise other layer if necessary.

[II-1-1. Layer of positive electrode active material]

A positive electrode active material layer is designed to contain positive electrode active material. There is no special limitation on the kind of positive electrode active material, insofar as it can absorb and release lithium ions. As examples can be cited oxides of such transition metals as Fe, Co, Ni and Mn, composite oxides of transition metals and lithium, and sulfides of transition metals.

As concrete examples of oxides of transition metals can be cited $MnO$, $V_2O_5$, $V_6O_{13}$ and $TiO_2$.

As concrete examples of composite oxides of transition metals and lithium can be cited lithium nickel composite oxide whose basic composition is $LiNiO_2$ or the like; lithium cobalt composite oxides whose basic composition is $LiCoO_2$ or the like; lithium manganese composite oxides whose basic composition is $LiMnO_2$, $LiMnO_4$ or the like.

As concrete examples of sulfide of transition metals can be cited $TiS_2$ and $FeS$.

Of these, composite oxides of lithium and transition metals are preferable because they can achieve both large capacity and high cycle characteristics of the lithium secondary battery.

In the above mentioned composite oxides of transition metals and lithium, it is preferable that a part of transition metal atoms, which constitute main part of the composite oxides, is replaced by other metals such as Al, B, Ti, Zr, V, Cr, Mn, Fe, Co, Ni, Cu, Zn, Mg, Ca and Ga, because the replacement increases stability. Particularly preferable are Al, Mg, Ca, Ti, Zr, Co, Ni and Mn, because the replacement then suppresses deterioration of the positive electrode at a high voltage.

Furthermore, it is preferable that the surface of the above mentioned composite oxide of transition metal and lithium is coated by oxides of such metals as Al, B, Ti, Zr, V, Cr, Mn, Fe, Co, Ni, Cu, Zn, Mg, Ca and Ga, because oxidation reaction of solvents at a high voltage is suppressed. Of these metal oxides, particularly preferable are $Al_2O_3$, $TiO_2$, $ZrO_2$ and $MgO$, because they are of high strength and can exert stable coating effect.

These positive electrode active materials can be used either with single kind thereof, or as a mixture of two or more kinds in any combination and in any ratio.

There is no special limitation on the specific surface area of the positive electrode active material, insofar as the advantage of the present invention is not significantly impaired. It is usually 0.1 $m^2$/g or more, preferably 0.2 $m^2$/g or more, and usually 10 $m^2$/g or less, preferably 5.0 $m^2$/g or less, more preferably 3.0 $m^2$/g or less. If the specific surface area is too small, rate characteristics may deteriorate and capacity may decrease. On the other hand, if it is too large, positive electrode active material and non-aqueous electrolyte solution may cause an undesirable interaction, leading to deterioration of cycle characteristics.

There is no special limitation on the average secondary particle diameter of the positive electrode active material, insofar as the advantage of the present invention is not significantly impaired. It is usually 0.2 μm or larger, preferably 0.3 μm or larger, and usually 20 μm or smaller, preferably 10 μm or smaller. If the average secondary particle diameter is too small, cycle deterioration of a lithium secondary battery may become marked or handling of the battery may become difficult. If it is too large, internal resistance of the battery may become large, leading to insufficient output.

There is no special limitation on the thickness of the positive electrode active material layer, insofar as the advantage of the present invention is not significantly impaired. The thickness is usually 1 μm or larger, preferably 10 μm or larger, more preferably 20 μm or larger, most preferably 40 μm or larger, and usually 200 μm or smaller, preferably 150 μm or smaller, more preferably 100 μm or smaller. If it is too thin, not only application is difficult and uniformity of the layer is difficult to achieve, but capacity of the lithium secondary battery of the present invention may become small. On the other hand, if it is too thick, rate characteristics may deteriorate.

For the preparation of positive electrode active material layer, for example, the above-mentioned positive electrode active material, binder and various auxiliary agent, if necessary, can be made into a slurry using a solvent and this slurry can be applied onto a current collector, followed by drying. Otherwise, the above positive electrode active material can be roll-molded into a sheet electrode, or compression-molded into a pellet electrode.

In the following, explanation will be given for the case of application and drying of a slurry on the positive electrode current collector.

There is no special limitation on the kind of a binder, insofar as it is stable in the non-aqueous solvent used for a non-aqueous electrolyte solution, and in the solvent used for preparation of the electrode. It is preferable that the binder is selected, taking into consideration its weatherability, stability against chemicals, heat resistance, incombustibility or the like. As examples can be cited inorganic materials such as silicate and liquid glass; alkane type polymers such as polyethylene, polypropylene and poly-1,1-dimethylethylene; unsaturated polymers such as polybutadiene and polyisoprene; polymers possessing a ring such as polystyrene, polymethylstyrene, polyvinylpyridine and poly-N-vinylpyrrolidone; acryl compound polymers such as methyl polymetacrylate, ethyl polymetacrylate, butyl polymetacrylate, methyl polyacrylate, ethyl polyacrylate, polyacrylic acid, polymetacrylic acid and polyacrylamide; fluorinated resins such as polyfluorinated vinyl, polyfluorinated vinylidene and polytetrafluoroethylene; CN-containing polymer such as polyacrylonitrile and polyvinylidene cyanide; polyvinyl alcohol type polymers such as polyvinyl acetate and polyvinyl alcohol; halogen-containing polymers such as polychlorinated vinyl and polychlorinated vinylidene; and electroconductive polymer such as polyaniline.

Also applicable are a mixture, modification, derivative, random copolymer, alternating copolymer, graft copolymer and block copolymer or the like of the above polymers.

Of these, preferable as binder is fluorinated resin and CN-containing polymer.

The binder can be used either singly or as a mixture of two or more kinds in any combination and in any ratio.

In case resin is used as binder, there is no special limitation on the weight average molecular weight of the resin, insofar as the advantage of the present invention is not significantly impaired. It is usually 10,000 or higher, preferably 100,000 or higher, and usually 3,000,000 or lower, preferably 1,000,000 or lower. If the molecular weight is too low, the strength of the electrode tends to be low. On the other hand, if the molecular weight is too high, viscosity tends to be high, making electrode formation difficult.

There is no special limitation on the amount of the binder used, insofar as the advantage of the present invention is not significantly impaired. For 100 weight parts of positive electrode active material (negative electrode active material when used for negative electrode. Hereinafter referred to simply as "active material" when no distinction is made between the two electrodes), the amount used is usually 0.1 weight part or more, preferably 1 weight part or more, and usually 30 weight parts or less, preferably 20 weight parts or less. If the amount of the binder is too small, the strength of the electrode tends to decrease. If the amount of the binder is too large, ion conductivity tends to decrease.

Furthermore, to the electrode may be added various auxiliary agent or the like as mentioned above. Examples of the auxiliary agents or the like include conductive material which heightens electrical conductivity of the electrode and reinforcing material which increases mechanical strength of the electrode.

The conductive material can be any material which can be added to active material in a proper amount and can impart electric conductivity. Usually, as concrete examples can be cited carbon powders such as acetylene black, carbon black and graphite, and various metal fiber and foil.

As concrete examples of reinforcing material can be cited various inorganic and organic, spherical and fibrous filler.

Above-cited auxiliary agent or the like can be used either singly or as a mixture of more than one kind in any combination and in any ratio.

There is no special limitation on the kind of solvent used for preparing a slurry, insofar as it can dissolve or disperse active material, binder, and, as needed, auxiliary agent. Either aqueous solvent or organic solvent can be used.

As examples of aqueous solvent can be cited water and alcohol. As organic solvent can be cited N-methylpyrrolidone (NMP), dimethylformamide, dimethylacetamide, methylethyl ketone, cyclohexanone, methyl acetate, methyl acrylate, diethyltriamine, N,N-dimethylaminopropylamine, ethylene oxide, tetrahydrofuran (THF), toluene, acetone, dimethyether, dimethylacetamide, hexamethylphosphoramide, dimethylsulfoxide, benzene, xylene, qunoline, pyridine, methylnaphthalene and hexane.

Above-cited solvent can be used either singly or as a mixture of two or more kinds in any combination and in any ratio.

It is preferable that an active material layer, prepared by coating and drying, is compressed by such means as roller pressing in order to increase the filling density of the positive electrode active material.

[II-1-2. Current collector]

Any material known for such a purpose as material of a collector can be used. Usually, metal or alloy is used. As concrete examples of a current collector of positive electrode can be cited aluminium, nickel and SUS (stainless steel).Of these, aluminium is preferable as current collector of the positive electrode. Above-cited material can be used either singly or as a mixture of more than one kind in any combination and in any ratio.

In order to increase the bindability of the current collector to the active material layer formed thereon, it is preferable that the collector surface is subjected to roughening procedure in advance. Examples of surface roughening methods include: blasting procedure; rolling with a rough-surfaced roll; mechanical polishing in which the collector surface is polished with such means as an abrasive cloth or abrasive paper onto which abradant particles are adhered, a whetstone, an emery buff and a wire brush equipped with steel wire; electropolishing; and chemical polishing.

There is no limitation on the shape of the collector. In order to decrease the battery weight and increase energy density per unit weight, it is also possible to use a perforated-type current collectors such as an expanded metal or a punching metal. This type of collector is freely adjustable in its weight by means of adjusting its ratio of perforation. Besides, when the application layer is formed on both sides of this perforated-type of collector, the application layer is riveted at these perforations and becomes resistant to exfoliation of the application layer. However, if the ratio of perforation is too high, bond strength may rather decrease because the contact area between the application layer and the current collector becomes too small.

In case a thin film is used as positive electrode current collector, there is no special limitation on its thickness, insofar as the advantage of the present invention is not significantly impaired. It is usually 1 $\mu$m or larger, preferably 5 $\mu$m or larger, and usually 100 $\mu$m or smaller, preferably 50 $\mu$m or smaller. If it is too thick, battery capacity as a whole becomes low, and if it is too thin, handling becomes difficult.

[II-2. Negative electrode]

A negative electrode is capable of absorbing and releasing lithium. If this requirement is met, there is no other limitation, insofar as the advantage of the present invention is not significantly impaired.

Usually, similarly to the case of positive electrode, a layer of negative electrode active material is formed on the current collector and used as negative electrode. A negative electrode may comprise other layer if necessary, similarly to the case of positive electrode.

[II-2-1. Negative electrode active material]

There is no special limitation on the material used as negative electrode active material, insofar as it can absorb and release lithium ions. Any known negative electrode active material can be used. Preferable, for example, are carbonaceous materials such as coke, acetylene black, mesophase microbeads and graphite; metallic lithium; and lithium alloys such as lithium-silicone and lithium-tin.

Lithium alloy is particularly preferable because it has high capacity per unit weight and is excellent in safety. From the standpoint of cycle characteristics and safety, it is also particularly preferable to use carbonaceous material.

Negative electrode active material can be used either singly or as a mixture of two or more compounds in any combination and in any ratio.

There is no special limitation on the particle diameter of negative electrode active material, insofar as the advantage of the present invention is not significantly impaired. In order to guarantee excellent battery characteristics in terms of initial efficiency, rate characteristics and cycle characteristics, it is usually 1 $\mu$m or larger, preferably 15 $\mu$m or larger, and usually 50 $\mu$m or smaller, preferably 30 $\mu$m or smaller.

Also preferable as carbonaceous material are, for example, the above carbonaceous material which is calcined after being coated with organic substance such as pitch, and carbonaceous material onto which more-amorphous carbon was layered by such means as chemical vacuum deposition (CVD).As organic substance used for coating can be cited: coal tar pitch ranging from soft pitch to hard pitch; coal-derived heavy oil such as dry distilled liquefied oil; heavy oil derived from straight distillation such as atmospheric residual oil and vacuum residual oil; petroleum-derived heavy oil such as heavy oil produced as by-product of pyrolysis of crude oil and naphtha (for example, ethylene heavy end).Also usable is a pulverized solid residue, 1 to 100 $\mu$m in diameter, obtained after distillation of the above heavy oil at 200 to 400 °C. Further, polyvinyl chloride resin, phenol resin and imide resin are also applicable.

In order to be used as negative electrode active material layer, the above negative electrode active material can be, for example, roll-molded into a sheet electrode, or compression-molded into a pellet electrode. Usually, however, as is the case with the positive electrode active material layer, the above-mentioned negative electrode active material, binder and various auxiliary agent, if necessary, can be made into a slurry using a solvent and this slurry can be applied onto a current collector, followed by drying, so as to form a negative electrode active material layer. The solvent, binder, and auxiliary agent that are similar to those used for positive electrode active material can be used to form the slurry.

[II-2-2. Current collector]

As material of a current collector of the negative electrode, any known material can be used. For example, metallic materials such as copper, nickel and SUS can be used. Copper is particularly preferable from the standpoint of ease of manipulation and cost.

It is preferable that the surface of the current collector of the negative electrode has been subjected to roughening procedure in advance, similarly to the case of the positive electrode collector.

There is no limitation on the shape of the current collector, similarly to the case of the positive electrode. It is possible to use a perforated-type current collectors such as an expanded metal or a punching metal. In case a thin film is used as current collector, the desirable thickness is similar to that of the positive electrode.

[II-3. Spacer]

Usually, a spacer is installed between the positive electrode and the negative electrode to prevent short circuit. There is no special limitation on the material or shape of the spacer. It is preferable that the spacer is stable in the non-aqueous electrolyte solution mentioned above, is superior in liquid-retaining property and can prevent short circuit between the electrodes without fail.

As material of the spacer can be used, for example, polyolefins such as polyethylene and polypropylene, polytetrafluoroethylene and polyether sulfone. Preferable is polyolefin.

As for the shape of the spacer, porous material is preferable. In this case, the non-aqueous electrolyte solution is used being impregnated within the porous spacer.

There is no special limitation on the thickness of the spacer, insofar as the advantage of the present invention is not significantly impaired. It is usually 1 μm or larger, preferably 5 μm or larger, more preferably 10 μm or larger, and usually 50 μm or smaller, preferably 40 μm or smaller, more preferably 30 μm or smaller. If the spacer is too thin, insulation performance or mechanical strength may be inadequate. If it is too thick, not only battery performance such as rate characteristics may deteriorate but energy density of the entire battery may decline.

In case a porous membrane is used as spacer, there is no special limitation on the porosity of the spacer, insofar as the advantage of the present invention is not significantly impaired. The porosity is usually 20 % or more, preferably 35 % or more, more preferably 45 % or more, and usually 90 % or less, preferably 85 % or less, more preferably 75 % or less. If the porosity is too low, membrane resistance increases and rate characteristics tend to deteriorate. If it is too high, the mechanical strength of the membrane decreases and insulation performance tends to decline.

In case a porous membrane is used as spacer, there is no special limitation on the average pore diameter of the spacer, insofar as the advantage of the present invention is not significantly impaired. It is usually 0.5 μm or smaller, preferably 0.2 μm or smaller, and usually 0.05 μm or larger. If it is too large, short circuit is liable to occur. If it is too small, membrane resistance may become large and rate characteristics may decline.

[II-4. Assembling of lithium secondary battery]

A lithium secondary battery of the present invention is manufactured by assembling the non-aqueous electrolyte solution of the present invention described above, the positive electrode, the negative electrode and, as needed, a spacer into a suitable shape. In addition, other components such as outer casing may be used, as needed. There is no special limitation on the shape of the lithium secondary battery of the present invention. Of various shapes generally employed, an appropriate one can be adopted depending on its use. Examples are a coin type battery, cylindrical type battery and square type battery. The method of assembling the battery is also arbitrary, and an appropriate one can be selected from among those usually employed, depending on the shape of the specific battery.

[II-5. Operation]

As described above, by using the non-aqueous electrolyte solution of the present invention for a lithium secondary battery of the present invention, even when charge is conducted until the terminal-to-terminal open circuit voltage reaches usually 4.25 V or higher, preferably 4.30 V or higher, more preferably 4.40 V or higher at the end of charge at 25° C, it is possible to suppress the reaction of the electrolyte solution, to suppress the evolution of gas markedly and to improve cycle characteristics substantially.

[III. Others]

[III-1. Terminal-to-terminal open circuit voltage at the end of charge]

In this specification, a terminal-to-terminal open circuit voltage of a battery means a battery voltage when there is no current in the circuit. The method of its measurement is arbitrary. For example, it can be measured using a usual charge and discharge instrument.

[III-2. Charge]

When a lithium secondary battery is charged, charge is generally done with a portion corresponding to resistance voltage drop added to the voltage. Namely, charge voltage is a sum of the terminal-to-terminal open circuit voltage and the product of charge current and resistance. Therefore, as the charge current becomes large, or internal resistance of the lithium secondary battery or resistance of protection circuit becomes large, the difference between the charge voltage and terminal-to-terminal open circuit voltage becomes large.

In a lithium secondary battery of the present invention, the method of charge is not particularly limited and any method of charge can be applied. For example, constant current charge (CC charge), constant current and constant voltage charge (CCCV charge), pulse charge and reverse taper charge can be used.

The end of charge can also be decided in various manners. For example, charge can be done for a predetermined period of time (for example, longer than was theoretically calculated for the completion of charge), or it can be done until the charge current decreases below a preset level, as well as until the voltage reaches a preset level.

In the current lithium secondary battery, a terminal-to-terminal open circuit voltage at the end of charge is usually in the range of 4.08 to 4.20 V. If this terminal-to-terminal open circuit voltage at the end of charge is higher, the capacity (mAh) of the lithium secondary battery is proportionally higher. Also, if the terminal-to-terminal open circuit voltage at the end of charge is higher, the voltage itself of the lithium secondary battery becomes higher and energy density per unit weight (mWh/kg) increases. Thus, a light lithium secondary battery with long duration is realized.

[III-3. Mechanism]

The mechanism through which the advantage of the present invention is achieved is not clear. The inventors' inference is as follows.

As mentioned above, development of a lithium secondary battery has been desired, which has a high terminal-to-terminal open circuit voltage at the end of charge. According to previous technologies, under the condition of high voltage of 4.25 V or higher, oxidation reaction of the electrolyte solution mainly at the positive electrode was very extensive, resulting in deterioration of cycle characteristics, and the lithium secondary battery fell short of practical use.

The vinylethylene carbonate compound of the present invention forms a protective coat on the positive electrode under the condition of high voltage and inhibit the reaction between the positive electrode and electrolyte solution. However, the vinylethylene carbonate compound is partly reduced at the negative electrode at the initial stage of charge and form a thick fragile coat.

Therefore, vinylethylene carbonate compound alone can not achieve marked improvement in cycle characteristics, because of fragile nature of the coat on the negative electrode.

On the other hand, the vinylene carbonate compound of the present invention, is partly or entirely reduced at the negative electrode at the initial stage of charge and form a stable protective coat on the negative electrode. However, the vinylene carbonate compound remaining in the electrolyte solution after initial charge is decomposed at the positive and negative electrodes especially during cycle tests.

Furthermore, the vinylene carbonate compound, when decomposed at the negative electrode, works to repair the coat of the negative electrode, which is desirable. However, when it is decomposed at the positive electrode, the coat is not formed and gas is evolved. The decomposition at the positive electrode becomes more marked as the voltage of the lithium secondary battery becomes high.

Accordingly, in a high voltage battery, vinylene carbonate compound alone, although it improves the stability of the coat at the negative electrode, causes evolved gas at the positive electrode due to self decomposition, leading to inadequate improvement in cycle characteristics.

The non-aqueous electrolyte solution of the present invention contains both vinylethylene carbonate compound and vinylene carbonate compound and, therefore, can suppress reactions at both positive electrode and negative electrode, as described below. Namely, the two compounds are both reduced in a concerted manner on initial charge, resulting in the formation of a hybrid coat (protective coat) on the negative electrode. This coat is low in resistance and is superior in heat stability and solvent stability. On the other hand, the decomposition of vinylene carbonate compound is inhibited at the positive electrode by a protective coat originating from the vinylethylene carbonate compound, leading to remarkable improvement in cycle characteristics of a lithium secondary battery under the condition of high voltage.

Examples

The present invention will be explained in further detail below by referring to Examples, Comparative examples and Reference examples. It is to be understood that the present invention is not limited to these Examples, Comparative examples and Reference examples and any modification can be added thereto, insofar as it does not depart from the scope of the present invention.

<Explanation of processes>

[Production of a positive electrode]

To a mixture of 92 weight parts of lithium cobaltic acid (LiCoO$_2$) as positive electrode active material, 4 weight parts of polyfluorovinylidene (hereinafter referred to as {PVdF} as appropriate) and 4 weight parts of acetylene black was added N-methylpyrrolidone, to make a slurry. This slurry was applied onto both sides of a current collector formed from aluminium and then dried to obtain the positive electrode.

[Production of a negative electrode]

To a mixture of 90 weight parts of graphite powder as negative electrode active material, and 10 weight parts of PVdF was added N-methylpyrrolidone to make a slurry. This slurry was applied onto both sides of a current collector formed from copper and then dried to obtain the negative electrode.

[Production of lithium secondary battery]

Fig. 1 shows a schematic cross-sectional view of a lithium secondary battery prepared in Examples, Comparative examples and Reference examples.

The above positive electrode, negative electrode and polyethylene-made biaxial stretched porous film (separator or spacer), with a film thickness of 16 $\mu$m, porosity of 45 % and mean pore diameter of 0.05 $\mu$m, were coated and impregnated individually with an electrolyte solution to be described later. The negative electrode (2), separator (3), positive electrode (1), separator (3) and negative electrode (2) were layered in this order to make a battery element. The battery element thus obtained was sandwiched between polyethylene terephthalate (PET) films (4). The battery element was then covered with a laminated film (7) consisting of an aluminium foil on both sides of which was formed a resin layer, with the terminals of the positive electrode and negative electrode being allowed to protrude from the film, followed by vacuum sealing, to prepare a sheet-type lithium secondary battery. The terminals of the positive electrode and negative electrode were fitted with a lead (8) containing a sealing agent. Further, in order to secure tightness between the electrodes, the sheet-type battery was sandwiched by silicon rubber (5) and glass plate (6) and compressed at a pressure of $3.4 \times 10^{-4}$ Pa.

[Capacity evaluation]

Discharge capacity of cobaltic acid lithium was set at 160 mAh/g per hour and discharge rate 1 C was calculated from this value and the amount of active material of the positive electrode of the lithium secondary battery to be evaluated, which were rate setting. The lithium secondary battery was placed in a thermostat bath which was maintained at 25° C and subjected to 0.2 C constant current and constant voltage charge (hereinafter referred to as "CCCV charge" as appropriate) until it reached 4.4 V. It was then discharged with a 0.2 C constant current until it reached 3 V for initial formation. The battery was again subjected to 0.7 C CCCV charge until it reached 4.4 V, followed by 0.2 C discharge again until it reached 3 V, and initial discharge capacity was calculated. All the cut-off current on charge was set at 0.05 C.

[Evaluation of continuous charge characteristics at 4.35 V]

The lithium secondary battery to be evaluated, for which capacity evaluation test had been completed, was placed in a thermostat bath which was maintained at 60 °C and charged with a 0.7 C constant current until it reached 4.35 V. Then, the battery was charged under constant voltage for 7 days and, after it was cooled to 25 °C, a terminal-to-terminal open circuit voltage was measured. Thereafter, the battery was submerged in ethanol in an ethanol bath and buoyant force was measured according to Archimedes' principle. The amount of gas evolved was calculated from the buoyant force. Further, in order to evaluate the extent of capacity deterioration after continuous charge, the battery was discharged with a 0.2 C constant current until it reached 3 V and then charged with a 0.7 C constant current until it reached 4.4 V, followed by discharge with a 0.2 C constant current until it reached 3 V and then discharge capacity {retention capacity (mAh)} was measured. Retention capacity retention rate after continuous charge was calculated according to the following calculation formula. The larger value of this rate means less deterioration of the battery.

[Mathematical Formula 1]

Retention capacity retention rate after 7 days of continuous charge (%) =

(retention capacity after 7 days of continuous charge / initial discharge capacity) × 100

[Evaluation of continuous charge characteristics at 4.45 V]

The lithium secondary battery to be evaluated, for which capacity evaluation test had been completed, was placed in a thermostat bath which was maintained at 60 0C and charged with a 0.7 C constant current until it reached 4.45 V. Then, the battery was charged under constant voltage for 7 days and, after it was cooled to 25 0C, a terminal-to-terminal open circuit voltage was measured. Thereafter, the battery was submerged in ethanol in an ethanol bath and buoyant force was measured according to Archimedes' principle. The amount of gas evolved was calculated from the buoyant force.

[Evaluation of cycle characteristics at 4.4 V]

The lithium secondary battery to be evaluated, for which capacity evaluation test had been completed, was placed in a thermostat bath which was maintained at 25 °C and subjected to 0.7 C CCCV charge until it reached 4.4 V (cut-off current was set at 0.05 C).The battery was then discharged with a 1 C constant current until it reached 3 V. This charge/discharge cycle was repeated 50 times. Capacity retention rate after 50 cycles was calculated according to the following calculation formula. The terminal-to-terminal open circuit voltage was also determined at the end of the first charge.

$$[\text{Mathematical Formula 2}]$$

$$\text{Capacity retention rate after 50 cycles (\%)} =$$

$$\{50^{th} \text{ discharge capacity (mAh/g)} / 1^{st} \text{ discharge capacity (mAh/g)}\} \times 100$$

[Evaluation of cycle characteristics at 4.2 V]

The lithium secondary battery to be evaluated, for which capacity evaluation test had been completed, was placed in a thermostat bath which was maintained at 25 °C and subjected to 0.7 C CCCV charge until it reached 4.2 V (cut-off current was set at 0.05 C).The battery was then discharged with a 1 C constant current until it reached 3 V. This charge/discharge cycle was repeated 200 times. However, rate setting in this case is as follows. Discharge capacity of cobaltic acid lithium was set at 140 mAh/g per hour and discharge rate 1 C was calculated from this value and the amount of active material of the positive electrode of the lithium secondary battery to be evaluated. Capacity retention rate after 200 cycles was calculated according to the following calculation formula. The terminal-to-terminal open circuit voltage was also determined at the end of the first charge.

$$[\text{Mathematical Formula 3}]$$

$$\text{Capacity retention rate after 200 cycles (\%)} =$$

$$\{200^{th} \text{ discharge capacity (mAh/g)} / 1^{st} \text{ discharge capacity (mAh/g)}\} \times 100$$

<Example 1-1>

A base electrolyte solution (1-I) was prepared by dissolving an electrolyte $LiPF_6$ at a concentration of 1 mol/L in a mixed solvent (volume ratio 1 : 3) of ethylene carbonate (EC) as a cyclic carbonate, and ethylmethyl carbonate (EMC) as a chain carbonate. To this base electrolyte solution (1-I) were added vinylethylene carbonate as vinylethylene carbonate compound and vinylene carbonate as vinylene carbonate compound so that the former represented 2 weight % and the latter also represented 2 weight % of the non-aqueous electrolyte solution, thus a non-aqueous electrolyte solution being obtained.

A lithium secondary battery was prepared by the method described previously using the non-aqueous electrolyte solution obtained, and 4.4 V cycle characteristics were evaluated. The results are shown in Table 1-1. In the Table 1-1, the numerical values shown in parentheses for the columns of vinylethylene carbonate compound, vinylene carbonate compound, electrolyte and non-aqueous solvent indicate composition of each in the non-aqueous electrolyte solution, and numerical values in parentheses for the column of non-aqueous solvent indicate mixing ratio of non-aqueous solvents.

<Example 1-2>

To the base electrolyte solution (1-I) were added vinylethylene carbonate as vinylethylene carbonate compound and vinylene carbonate as vinylene carbonate compound so that the former represented 0.5 weight % and the latter represented 1 weight % of the non-aqueous electrolyte solution, thus a non-aqueous electrolyte solution being obtained. A lithium secondary battery was prepared by the method described previously using the non-aqueous electrolyte solution obtained, and 4.4 V cycle characteristics were evaluated. The results are shown in Table 1-1.

<Example 1-3>

To the base electrolyte solution (1-I) were added vinylethylene carbonate as vinylethylene carbonate compound and vinylene carbonate as vinylene carbonate compound so that the former represented 1 weight % and the latter represented 1 weight % of the non-aqueous electrolyte solution, thus a non-aqueous electrolyte solution being obtained. A lithium secondary battery was prepared by the method described previously using the non-aqueous electrolyte solution obtained, and 4.4 V cycle characteristics were evaluated. The results are shown in Table 1-1.

<Example 1-4>

To the base electrolyte solution (1-I) were added vinylethylene carbonate as vinylethylene carbonate compound and vinylene carbonate as vinylene carbonate compound so that the former represented 3 weight % and the latter represented 1 weight % of the non-aqueous electrolyte solution, thus a non-aqueous electrolyte solution being obtained. A lithium secondary battery was prepared by the method described previously using the non-aqueous electrolyte solution obtained, and 4.4 V cycle characteristics were evaluated. The results are shown in Table 1-1.

<Example 1-5>

To the base electrolyte solution (1-I) were added vinylethylene carbonate as vinylethylene carbonate compound and vinylene carbonate as vinylene carbonate compound so that the former represented 5 weight % and the latter represented 1 weight % of the non-aqueous electrolyte solution, thus a non-aqueous electrolyte solution being obtained. A lithium secondary battery was prepared by the method described previously using the non-aqueous electrolyte solution obtained, and 4.4 V cycle characteristics were evaluated. The results are shown in Table 1-1.

<Example 1-6>

To the base electrolyte solution (1-I) were added vinylethylene carbonate as vinylethylene carbonate compound and vinylene carbonate as vinylene carbonate compound so that the former represented 1 weight % and the latter represented 3 weight % of the non-aqueous electrolyte solution, thus a non-aqueous electrolyte solution being obtained. A lithium secondary battery was prepared by the method described previously using the non-aqueous electrolyte solution obtained, and 4.4 V cycle characteristics were evaluated. The results are shown in Table 1-1.

<Example 1-7>

To the base electrolyte solution (1-I) were added vinylethylene carbonate as vinylethylene carbonate compound and vinylene carbonate as vinylene carbonate compound so that the former represented 1 weight % and the latter represented 5 weight % of the non-aqueous electrolyte solution, thus a non-aqueous electrolyte solution being obtained. A lithium secondary battery was prepared by the method described previously using the non-aqueous electrolyte solution obtained, and 4.4 V cycle characteristics were evaluated. The results are shown in Table 1-1.

<Example 1-8>

To the base electrolyte solution (1-I) were added 1,2-divinylethylene carbonate as vinylethylene carbonate compound and vinylene carbonate as vinylene carbonate compound so that the former represented 1 weight % and the latter represented 1 weight % of the non-aqueous electrolyte solution, thus a non-aqueous electrolyte solution being obtained. A lithium secondary battery was prepared by the method described previously using the non-aqueous electrolyte solution obtained, and 4.4 V cycle characteristics were evaluated. The results are shown in Table 1-1.

<Example 1-9>

To the base electrolyte solution (1-I) were added 1-methyl-1-vinylethylene carbonate as vinylethylene carbonate compound and vinylene carbonate as vinylene carbonate compound so that the former represented 1 weight % and the latter represented 1 weight % of the non-aqueous electrolyte solution, thus a non-aqueous electrolyte solution being obtained. A lithium secondary battery was prepared by the method described previously using the non-aqueous electrolyte solution obtained, and 4.4 V cycle characteristics were evaluated. The results are shown in Table 1-1.

<Example 1-10>

To the base electrolyte solution (1-I) were added vinylethylene carbonate as vinylethylene carbonate compound and 1,2-dimethylvinylene carbonate as vinylene carbonate compound so that the former represented 1 weight % and the latter represented 1 weight % of the non-aqueous electrolyte solution, thus a non-aqueous electrolyte solution being obtained. A lithium secondary battery was prepared by the method described previously using the non-aqueous electrolyte solution obtained, and 4.4 V cycle characteristics were evaluated. The results are shown in Table 1-1.

<Example 1-11>

A base electrolyte solution (1-II) was prepared by dissolving an electrolyte $LiPF_6$ at a concentration of 1.25 mol/L in a mixed solvent (volume ratio 1:1:1) of ethylene carbonate (EC) as a cyclic carbonate, ethylmethyl carbonate (EMC) as a chain carbonate and diethylcarbonate (DEC) as a chain carbonate. To this base electrolyte solution (1-II) were added vinylethylene carbonate, which is a cyclic carbonate having an unconjugated unsaturated bond outside the ring, as vinylethylene carbonate compound and vinylene carbonate as vinylene carbonate compound so that the former represented 1 weight % and the latter also represented 1 weight % of the non-aqueous electrolyte solution, thus a non-aqueous electrolyte solution being obtained. A lithium secondary battery was prepared by the method described previously using the non-aqueous electrolyte solution obtained, and 4.4 V cycle characteristics were evaluated. The results are shown in Table 1-1.

<Comparative example 1-1>

A lithium secondary battery was prepared by the method described previously using the base electrolyte solution (1-I) itself, and 4.4 V cycle characteristics were evaluated. The results are shown in Table 1-1.

<Comparative example 1-2>

To the base electrolyte solution (1-I) was added vinylethylene carbonate as vinylethylene carbonate compound so that it represented 2 weight % of the non-aqueous electrolyte solution, thus a non-aqueous electrolyte solution being obtained. A lithium secondary battery was prepared by the method described previously using the non-aqueous electrolyte solution obtained, and 4.4 V cycle characteristics were evaluated. The results are shown in Table 1-1.

<Comparative example 1-3>

To the base electrolyte solution (1-I) was added vinylene carbonate as vinylene carbonate compound so that it represented 2 weight % of the non-aqueous electrolyte solution, thus a non-aqueous electrolyte solution being obtained. A lithium secondary battery was prepared by the method described previously using the non-aqueous electrolyte solution obtained, and 4.4 V cycle characteristics were evaluated. The results are shown in Table 1-1.

[Table 1]

Table 1-1

| | Composition of electrolyte solution | | | | cycle characteristics evaluation | | |
|---|---|---|---|---|---|---|---|
| | vinylethylene carbonate compound (weight %) | vinylene carbonate compound (weight %) | Electrolyte (M) | non-aqueous solvent (mixing ratio) | cycle test condition | terminal-to-terminal open circuit voltage at the first cycle (V) | capacity retention rate after cycle test (%) |
| Example 1-1 | vinylethylene carbonate (2) | vinylene carbonate (2) | LiPF$_6$ (1) | EC+EMC (1:3) | 50 times at 4.4V | 4.39 | 96.5 |
| Example 1-2 | vinylethylene carbonate (0.5) | vinylene carbonate (1) | LiPF$_6$ (1) | EC+EMC (1:3) | 50 times at 4.4V | 4.40 | 95.7 |
| Example 1-3 | vinylethylene carbonate (1) | vinylene carbonate (1) | LiPF$_6$ (1) | EC+EMC (1:3) | 50 times at 4.4V | 4.40 | 96.1 |
| Example 1-4 | vinylethylene carbonate (3) | vinylene carbonate (1) | LiPF$_6$ (1) | EC+EMC (1:3) | 50 times at 4.4V | 4.39 | 95.4 |
| Example 1-5 | vinylethylene carbonate (5) | vinylene carbonate (1) | LiPF$_6$ (1) | EC+EMC (1:3) | 50 times at 4.4V | 4.38 | 93.7 |
| Example 1-6 | vinylethylene carbonate (1) | vinylene carbonate (3) | LiPF$_6$ (1) | EC+EMC (1:3) | 50 times at 4.4V | 4.39 | 96.0 |
| Example 1-7 | vinylethylene carbonate (1) | vinylene carbonate (5) | LiPF$_6$ (1) | EC+EMC (1:3) | 50 times at 4.4V | 4.39 | 94.1 |
| Example 1-8 | 1,2-divinylethylene carbonate (1) | vinylene carbonate (1) | LiPF$_6$ (1) | EC+EMC (1:3) | 50 times at 4.4V | 4.40 | 94.8 |
| Example 1-9 | 1-methyl-1-vinylethylene carbonate (1) | vinylene carbonate (1) | LiPF$_6$ (1) | EC+EMC (1:3) | 50 times at 4.4V | 4.40 | 94.5 |
| Example 1-10 | vinylethylene carbonate (1) | 1,2-dimethylvinylene carbonate (1) | LiPF$_6$ (1) | EC+EMC (1:3) | 50 times at 4.4V | 4.40 | 93.8 |
| Example 1-11 | vinylethylene carbonate (1) | vinylene carbonate (1) | LiPF$_6$ (1.25) | EC+EMC+ DEC (1:1:1) | 50 times at 4.4V | 4.40 | 96.0 |
| Comparative example 1-1 | None | None | LiPF$_6$ (1) | EC+EMC (1:3) | 50 times at 4.4V | 4.40 | 87.6 |

EP 1 892 789 B1

18

(continued)

| | Composition of electrolyte solution | | | | cycle characteristics evaluation | | |
|---|---|---|---|---|---|---|---|
| | vinylethylene carbonate compound (weight %) | vinylene carbonate compound (weight %) | Electrolyte (M) | non-aqueous solvent (mixing ratio) | cycle test condition | terminal-to-terminal open circuit voltage at the first cycle (V) | capacity retention rate after cycle test (%) |
| Comparative example 1-2 | vinylethylene carbonate (2) | None | $LiPF_6$ (1) | EC+EMC (1:3) | 50 times at 4.4V | 4.40 | 88.3 |
| Comparative example 1-3 | None | vinylene carbonate (2) | $LiPF_6$ (1) | EC+EMC (1:3) | 50 times at 4.4V | 4.40 | 92.5 |

[Summary]

From Table 1-1, it is evident that the non-aqueous electrolyte solution of Example 1-1 to Example 1-11, which contains both vinylethylene carbonate compound and vinylene carbonate compound of the present invention, has a large capacity retention rate after cycle tests and can achieve excellent cycle characteristics, in comparison with the non-aqueous electrolyte solution which contains neither vinylethylene carbonate compound nor vinylene carbonate compound (Comparative example 1-1) or non-aqueous electrolyte solution which contains either one of these compounds (Comparative example 1-2, 1-3).

Industrial applicability

The use of the lithium secondary battery of the present invention is not limited to special ones. It can be used for various known purposes. As concrete examples can be cited notebook computers, pen-input personal computers, mobile personal computers, electronic book players, cellular phones, portable facsimiles, portable copiers, portable printers, headphone stereos, videotape cameras, liquid crystal display televisions, handy cleaners, portable CD players, mini disc players, transceivers, electronic databooks, electronic calculators, memory cards, portable tape recorders, radios, backup power supplies, motors, illuminators, toys, game machines, watches, electrical flash, cameras, etc.

**Claims**

1. Use of at least one vinylethylene carbonate compound and at least one vinylene carbonate compound in the manufacture of a lithium secondary battery having a terminal-to-terminal open circuit voltage at 25 °C at the end of charge of 4.25 V or higher, the lithium secondary battery comprising:

   a positive electrode;
   a negative electrode; and
   a non-aqueous electrolyte solution containing both at least one vinylethylene carbonate compound and at least one vinylene carbonate compound.

2. The use as defined in claim 1, wherein said vinylene carbonate compound is vinylene carbonate.

3. The use as defined in claim 1 or claim 2, wherein said vinylethylene carbonate compound is at least one type selected from the group consisting of vinylethylene carbonate, 1,2-divinylethylene carbonate and 1-methyl-1-vinylethylene carbonate.

4. The use as defined in any one of claims 1-3, wherein the terminal-to-terminal open circuit voltage is 4.3 V or higher.

**Patentansprüche**

1. Verwendung von mindestens einer Vinylethylencarbonatverbindung und mindestens einer Vinylencarbonatverbindung zur Herstellung einer Lithiumsekundärbatterie mit einer Leerlaufspannung von Klemme zu Klemme bei 25°C nach Ende des Ladevorgangs von 4,25 V oder mehr, die Lithiumsekundärbatterie umfassend:

   eine positive Elektrode;
   eine negative Elektrode; und
   eine nichtwässrige Elektrolytlösung, die mindestens eine Vinylethylencarbonatverbindung und mindestens eine Vinylencarbonatverbindung enthält.

2. Verwendung gemäß Anspruch 1, wobei die Vinylencarbonatverbindung Vinylencarbonat ist.

3. Verwendung gemäß Anspruch 1 oder 2, wobei die Vinylethylencarbonatverbindung mindestens eine Art ist, die ausgewählt wird aus der Gruppe bestehend aus Vinylethylencarbonat, 1,2-Divinylethylencarbonat und 1-Methyl-l-vinylethylencarbonat.

4. Verwendung gemäß einem der Ansprüche 1 bis 3, wobei die Leerlaufspannung von Klemme zu Klemme 4,3 V oder mehr beträgt.

**Revendications**

1. Utilisation d'au moins un composé de carbonate de vinyléthylène et d'au moins un composé de carbonate de vinylène dans la fabrication d'une batterie secondaire au lithium ayant une tension de circuit ouvert de borne à borne à 25 °C en fin de charge égale ou supérieure à 4,25 V, la batterie secondaire au lithium comprenant :

   une électrode positive ;
   une électrode négative ; et
   une solution d'électrolyte non aqueuse contenant à la fois au moins un composé de carbonate de vinyléthylène et au moins un composé de carbonate de vinylène.

2. Utilisation selon la revendication 1, dans laquelle ledit composé de carbonate de vinylène est le carbonate de vinylène.

3. Utilisation selon la revendication 1 ou la revendication 2, dans laquelle ledit composé de carbonate de vinyléthylène est d'au moins un type choisi dans le groupe constitué par le carbonate de vinyléthylène, le carbonate de 1,2-divinyléthylène et le carbonate de 1-méthyl-1-vinyléthylène.

4. Utilisation selon l'une quelconque des revendications 1 à 3, dans laquelle la tension de circuit ouvert de borne à borne est égale ou supérieure à 4,3 V.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3417228 B
- JP 2003272704 A
- JP 3019713 A
- JP 2004235145 A
- EP 1199765 A1
- EP 1406337 A1
- JP 2002042865 A
- EP 1276165 A1
- US 20040224235 A1
- JP 11354385 A
- US 6861175 B2
- EP 1357628 A1